# EUROPEAN PATENT APPLICATION

(11) **EP 2 743 535 A1**
(43) Date of publication of application: **18.06.2014**
(21) Application number: 12822461.5
(22) Date of filing: 09.08.2012
(51) Int. Cl.: F16F 7/00, B29C 39/10, B29C 39/12, B29C 39/26, B29C 44/00, B60R 21/04, B29K 75/00, B29K 105/04

(54) **IMPACT ABSORBER AND METHOD FOR PRODUCING IMPACT ABSORBER**

(30) Priority: 11.08.2011 JP 2011175976
(71) Applicant: Bridgestone Corporation, Tokyo 104-8340 (JP)
(72) Inventor: SATO, Masatoshi, Tokyo 104-8340 (JP); ZENBA, Masaaki, Tokyo 104-8340 (JP); EBE, Kazushige, Tokyo 104-8340 (JP); TAKAHASHI, Yoshiyuki, Tokyo 104-8340 (JP)
(74) Representative: Waldren, Robin Michael
(86) International application number: PCT/JP2012/070376
(87) International publication number: WO 2013/022069

(57) **Abstract**

An energy absorbing body or the like is provided with high productivity whilst maintaining strength.

An energy absorbing body includes: a first energy absorbing member (28A) that contains a rigid polyurethane foam (20A); a second energy absorbing member (20B) that contains a rigid polyurethane foam (28B) and that has different compressive stress compared to the first energy absorbing member (28A); and a partitioning member (20C) that contains a rigid polyurethane foam, that is disposed between the first energy absorbing member (20A) and the second energy absorbing member (20B), and that has a smaller difference in compressive stress with respect to the first energy absorbing member (20A) than a difference in compressive stress with respect to the second energy absorbing member (20B).

## Description

### Technical Field

The present invention relates to an energy absorbing body and an energy absorbing body manufacturing method.

### Background Art

Proposals exist for energy absorbing bodies employed for example in vehicle interiors that are integrally formed with members of differing compressive stresses (energy absorption performance).

Patent Document 1 (Japanese Patent Application Laid-Open (JP-A) No. 2002-193056)) is an example of a manufacturing method of such an energy absorbing body. In the disclosed manufacturing method, a lower mold of a forming mold is integrally provided with partitioning member made of a similar material to the lower mold. Plural different materials are supplied to respective compartments that are partitioned by a partitioning member, thereby integrally molding plural energy absorbing materials that have differing compressive stresses.

Moreover, Patent Document 2 (JP-ANo. 2010-52267) proposes a method of molding one rigid foam material in a separate mold in advance, and then further setting the one rigid foam material in a mold for the final product, pouring in another rigid foam material so as to integrally mold together.

### DISCLOSURE OF INVENTION

### Technical Problem

However, in the method of Patent Document 1, when the partitioning member (the depth inside the energy absorption member) is tall in height, there is a possibility that a weak point at which there is insufficient strength may form at the location of a boundary portion, during mold release or during use after molding. Moreover, when the partitioning member lacks sufficient height, depending on factors such as the method of introducing the foam raw materials (for example rigid polyurethane foam materials), a uniform boundary may not form between the plural types of rigid polyurethane foam material though plural types of rigid polyurethane foam material are introduced, with the possibility that it may be difficult to obtain consistent energy absorbing body properties (elasticity, compressive stress, and the distribution thereof) for each product.

Moreover, the method of Patent Document 2 approximately doubles the man-hours and production time required.

In consideration of the above circumstances, an object of the present invention is to provide an energy absorbing body and an energy absorbing body manufacturing method with high productivity whilst maintaining strength.

### Solution to Problem

The present invention addresses the issues described above by the following means.
<1> An energy absorbing body including: a first energy absorbing member that contains a rigid polyurethane foam; a second energy absorbing member that contains a rigid polyurethane foam and that has different compressive stress compared to the first energy absorbing member; and a partitioning member that contains a rigid polyurethane foam, that is disposed between the first energy absorbing member and the second energy absorbing member, and that has a smaller difference in compressive stress with respect to the first energy absorbing member than a difference in compressive stress with respect to the second energy absorbing member.
<2> The energy absorbing body of <1>, wherein the partitioning member is a plate shaped member.
<3> The energy absorbing body of either <1> or <2>, wherein the compressive stress of the first energy absorbing member is greater than the compressive stress of the second energy absorbing member.
<4> The energy absorbing body of any one of <1> to claim <3>, wherein the partitioning member has a thickness of from 10 mm to 50 mm.
<5> The energy absorbing body of any one of <1> to <4>, wherein the partitioning member includes a leg portion on a first energy absorbing member side only.
<6> The energy absorbing body of any one of <1> to <5>, wherein the partitioning member includes an uneven portion on a first energy absorbing member side only.
<7> The energy absorbing body of any one of <1> to <6>, further including an adhesive layer between the first energy absorbing member and the partitioning member, or between the second energy absorbing member and the partitioning member, or both.
<8> A manufacturing method for the energy absorbing body of any one of <1> to <7>, the energy absorbing body manufacturing method including: a placement process of placing the partitioning member in a mold for molding the energy absorbing member, thereby dividing an inside of the mold into 2 or more compartments; a molding process of molding the first energy absorbing member and the second energy absorbing member integrally with one another by respectively introducing and foaming a first rigid polyurethane foam material in one compartment out of the 2 compartments and a second rigid polyurethane foam material in the other compartment out of the 2 compartments; and a mold release process of releasing as a single unit the first energy absorbing member, the second energy absorbing member and the partitioning member from the mold.
<9> The energy absorbing body manufacturing method of <8>, wherein in the placement process, the partitioning member is supported by a support portion configured by a groove that extends in a pull-out direction along an inner wall of the mold.
<10> The energy absorbing body manufacturing method of either <8> or <9>, wherein: an air communication hole is provided inside a lower mold of the mold; a mold release film that is formed with an external profile following a shape of an inner face of the lower mold is disposed in the lower mold prior to the placement process; and in the mold release process, air is introduced through the air communication hole into a gap between the mold release film and the lower mold, separating as a single unit the first energy absorbing member, the second energy absorbing member and the partitioning member from the mold.
<11> The energy absorbing body manufacturing method of <8>, wherein: a mold release film, that is formed with an external profile following a shape of an inner face of a lower mold, is disposed in the lower mold of the mold prior to the placement process; and in the placement process, the partitioning member is supported by a support portion that projects out at an inner face of the mold release film, which is formed with an external profile following the shape of the inner face of the lower mold.

### Advantageous Effects of Invention

The present invention enables provision of an energy absorbing body at high productivity whilst maintaining strength, and provision of a manufacturing method of the same.

### BRIEF DESCRIPTION OF DRAWINGS

Fig. 1 is a front face cross-section view illustrating an energy absorbing body of a first exemplary embodiment of the present invention and a mold of the same.
Fig. 2A is a schematic view illustrating positional relationships in the vehicle front-rear direction of an occupant of small physical frame and low weight, and an occupant of large physical frame and large weight.
Fig. 2B is a comparative graph illustrating a relationship between input and displacement at high absorption energy locations and at low energy absorption locations.
Fig. 3 is a graph respectively illustrating energy absorption performance of a partitioning member and energy absorption performance of a first energy absorbing member.
Fig. 4A is a perspective view illustrating a relationship between a lower mold cavity of a lower mold and a partitioning member in the first exemplary embodiment.
Fig. 4B is a plan view illustrating a relationship between a lower mold cavity of a lower mold and a partitioning member in the first exemplary embodiment.
Fig. 4C is a front face cross-section illustrating a relationship between a lower mold cavity of a lower mold and a partitioning member in the first exemplary embodiment.
Fig. 5A is a schematic view illustrating a molding process of an energy absorption body of the first exemplary embodiment of the present invention.
Fig. 5B is a schematic view illustrating a mold release process of an energy absorbing body of the first exemplary embodiment of the present invention.
Fig. 6 is a front face cross-section illustrating an energy absorbing body of a second exemplary embodiment of the present invention and a mold of the same.
Fig. 7 is a perspective view illustrating an enclosing member employed in an energy absorbing body of the second exemplary embodiment of the present invention.
Fig. 8A is a perspective view illustrating a relationship between a lower mold cavity of a lower mold and a partitioning member in another configuration of the first exemplary embodiment.
Fig. 8B is a front face cross-section illustrating a relationship between a lower mold cavity of a lower mold and a partitioning member in another configuration of the first exemplary embodiment.
Fig. 9A is a perspective view illustrating a relationship between a lower mold cavity of a lower mold and a partitioning member in another configuration of the first exemplary embodiment.
Fig. 9B is a front face cross-section illustrating a relationship between a lower mold cavity of a lower mold and a partitioning member in another configuration of the first exemplary embodiment.
Fig. 10A is a drawing illustrating an enclosing member of another configuration of the second exemplary embodiment.
Fig. 10B is a drawing illustrating an example of application of the enclosing member illustrated in Fig. 10A.
Fig. 10C is a drawing illustrating a modified example of an enclosing member that differs from the enclosing portion illustrated in Fig. 10A.
Fig. 11 is a drawing illustrating a relationship between a lower mold cavity of a lower mold and a partitioning member of another configuration of the first exemplary embodiment.
Fig. 12A is a schematic view illustrating 2 types of rigid polyurethane foam materials just before mixing together in a conventional energy absorbing member.
Fig. 12B is a schematic view illustrating an example of 2 types of rigid polyurethane foam materials that have mixed together in a conventional energy absorbing member.
Fig. 13A is a schematic view illustrating a process in which a weak point forms at a boundary portion between 2 types of rigid polyurethane foam materials in a conventional energy absorbing member.
Fig. 13B is a schematic view illustrating a process in which a weak point forms at a boundary portion, as a continuation of Fig. 13A.
Fig. 13C is a schematic view illustrating a process in which a weak point forms at a boundary portion, as a continuation of Fig. 13B.

### BEST MODE FOR CARRYING OUT THE INVENTION

Explanation follows regarding exemplary embodiments of the present invention. Note that from the second exemplary embodiment onwards, configuration elements similar to those that have already been described are allocated the same reference numerals thereto and explanation thereof is omitted. Note that energy absorbing bodies obtained in the following exemplary embodiments may be employed as industrial material in vehicle interior members or the like, and in particular are preferably applied as energy absorbing bodies that are for example attached to the inside of a vehicle door trim and that absorb energy in the event of a collision so as to protect an occupant.

### First Exemplary Embodiment

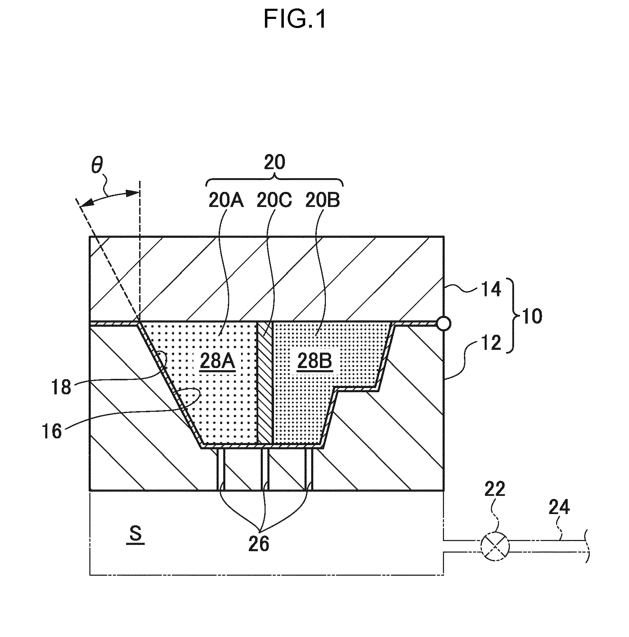

Firstly, explanation is given regarding a first exemplary embodiment. Fig. 1 is a front face cross-section illustrating an energy absorbing body and a mold thereof according to the first exemplary embodiment.

### Overall Configuration

As illustrated in Fig. 1, a mold (mold) 10 for molding an energy absorbing body employed in the present exemplary embodiment is configured from a lower mold 12 and an upper mold 14. The lower mold 12 and the upper mold 14 of the mold 10 are coupled together by a hinge so as to be capable of opening and closing. An upper central portion of the lower mold 12 is formed with a recess shaped lower mold cavity 16, and the upper mold 14 is formed as a lid body that closes off an upper end opening portion of the lower mold cavity 16. In a closed state of the upper mold 14 and the lower mold 12, the upper mold 14 places a space inside the lower mold cavity 16 in a closed-off state. An energy absorbing body 20 containing a rigid polyurethane foam is molded in the space inside the lower mold cavity 16.

In the present exemplary embodiment, a mold release film 18 with a similar profile to a front face of the lower mold cavity 16 that is formed in advance using a vacuum forming method is disposed at an upper portion of the lower mold 12. The mold release film 18 is held at an upper end face of the lower mold 12 by fixing pins (not illustrated in the drawings), with the mold release film 18 being fixed firmly to the lower mold 12 due to being gripped by film air-seal packing disposed at the upper end face of the lower mold 12 and also a film press (neither of which are illustrated in the drawings). In this fixed state, slippage of the film does not occur even when mold release is repeated several tens of times, and a mold release operation can moreover be performed easily. In order to mold the mold release film 18, preferably a separate mold is employed to the mold 10 that is employed for molding the energy absorbing body, in consideration of for example thermal contraction of the film.

A box shaped air chamber S is formed at a bottom portion of the lower mold 12. The air chamber S is connected to one end of an air pipe 24 that has a pressure regulation valve 22 installed partway along. The other end of the air pipe 24 is coupled to an air introduction/suction device such as a vacuum pump (not shown in the drawings). The air chamber S is placed in communication with the lower mold cavity 16 through plural air communication holes 26.

It is desirable for the mold release film 18 to exhibit good separation characteristics from the energy absorbing body 20 and to be reusable. Namely, although plastic films for separating the molding of the energy absorbing body 20 include polyethylene films and polypropylene films, polyethylene films stretch and deform readily and so can only be used a few times. From this perspective, it is preferable to employ a polypropylene film that has does not readily stretch or deform during separation from the energy absorbing body 20, and that has good separation characteristics.

Moreover, unlike soft polyurethane foam, rigid polyurethane foam that is contained in the energy absorbing body 20 undergoes buckling deformation, namely is destroyed, when force exceeding a permissible range is applied thereto. During mold release the inside of the rigid polyurethane foam is in an expanded state due to reaction heat, and exerts a force in the region of 0.5 to 1 kg/cm² against side faces of the mold 10. However, in the present exemplary embodiment, even when the energy absorbing body 20 containing a rigid polyurethane foam exerts a force in this region on the side faces of the mold 10, the mold release film 18 is disposed in the mold 10 as described above, and the molding lifts out of the lower mold 12 by application of air pressure between the mold release film 18 and the lower mold cavity 16 through the air communication holes 26, namely enabling removal from the mold comparatively smoothly.
The thickness of the mold release film 18 is preferably set at 0.3 mm to 1.0 mm, and is particularly preferably set at 0.3 mm to 0.6 mm. At a thickness of less than 0.3 mm, sufficient strength cannot be maintained, and the mold release film 18 could be damaged during molding. However at a thickness greater than 1.0 mm, an issue arises that due to the product dimension tolerance becoming larger, it becomes necessary to manufacture a slightly larger mold, and the mold release film 18 does not readily deform during mold release, such that depending on the shape of the molding it may not be easy to separate the mold release film 18 for complicate shapes.

Moreover, it is desirable to mold the mold release film 18 in advance by a vacuum forming method. Note that when the mold release film 18 is molded in advance by a vacuum forming method, the mold release film 18 can be readily restored to its original state after molding and removing the energy absorbing body 20 from the mold.

Moreover, when formed in a specific shape using a press forming method rather than a vacuum forming method, corner portions of the male mold profile are locally pressed during manufacture, and it is therefore somewhat difficult to achieve a shape that exactly follows the lower mold cavity 16, and there is a tendency to lift away from the lower mold 12. Corner portions of the mold release film moreover readily sustain damage, resulting in poor durability. In particular, when the lower mold cavity 16 has a deep profile, a thin film can slip and become stretched in narrow gaps, such that the mold release film 18 has a tendency to thin.
It is preferable to apply a uniform force to the mold release film 18, however due to the thin film thickness it is difficult for the upper mold 14 to press the mold release film 18 easily, and it is conceivable that manufacture of a product matching the cavity profile may not be possible due for example to one-sided contact and thinning of the molding. Note that a known method may be employed for the vacuum forming method, however in the present exemplary embodiment vacuum molding is preferably performed using a polypropylene film heated to 180 °C to 200 °C for 15 to 20 seconds.

### Energy Absorbing Body 20 Configuration

The energy absorbing body 20 formed using the mold 10 as explained above is provided with a first energy absorbing member 20A, a second energy absorbing member 20B, and a partitioning member 20C.
The energy absorbing body 20 is preferably provided with a release taper that enables easier mold release and reduces resistance during pushing up such that for example dents and scratches do not occur. A taper angle *θ* is preferably 3° or greater, and particularly preferably between 3° and 5°, however this differs depending on the thickness and size of the energy absorbing body 20.

The first energy absorbing member 20A and the second energy absorbing member 20B respectively contain rigid polyurethane foams 28A, 28B, and the first energy absorbing member 20A and the second energy absorbing member 20B preferably contain the rigid polyurethane foams 28A, 28B as the respective main components. Note that "main component" refers to a component contained at more than 50% out of the overall configuration components configuring the first energy absorbing member 20A and the second energy absorbing member 20B. Impurities and the like other than the rigid polyurethane foams 28A, 28B may also be mixed in to the first energy absorbing member 20A and the second energy absorbing member 20B.
The rigid polyurethane foam material that is the raw material used to form the rigid polyurethane foams 28A and 28B, may employ a main component of a polyhydroxy compound or a polyisocyanate compound mixed with a catalyst, a foaming agent, a foam stabilizing agent, a flame retardant and other auxiliary agents as desired. Commonly used known compositions may be employed in the manufacture of the rigid polyurethane foams 28A, 28B, and the amounts employed therein may also be standard amounts. Moreover, compressive stress of the first energy absorbing member 20A and the second energy absorbing member 20B can be regulated with reference to the compressive stress of the rigid polyurethane foam employed as the main material. The compressive stress of the rigid polyurethane foams can be regulated by modifying the types and quantities of raw materials and other agents contained in the rigid polyurethane foam raw materials. Rigid polyurethane foam materials with a desirable compressive stress may also be acquired as commercially available products.

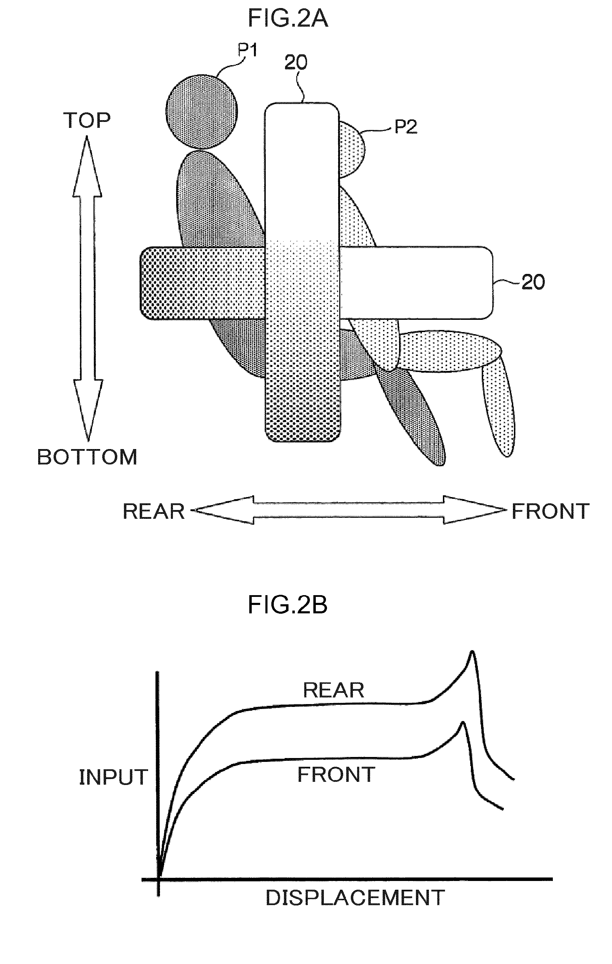

The second energy absorbing member 20B has compressive stress differing from that of the first energy absorbing member 20A.
The first energy absorbing member 20A and second energy absorbing member 20B have different energy absorption performance since due to the differing compressive stress (also known as the crushing stress), and the first energy absorbing member 20A and the second energy absorbing member 20B are appropriately disposed within energy absorbing body 20 according to the performance demanded at each location. Namely a configuration in which the first energy absorbing member 20A and the second energy absorbing member 20B are disposed corresponding to the vehicle front-rear direction is desirable for example in a case in which, as illustrated in Fig. 2A and Fig. 2B, there is a tendency for an occupant of small frame and low body weight demanding energy absorption performance with a small buckling load to contact towards the vehicle front, and a tendency for an occupant of large frame and high body weight demanding energy absorption performance with a large buckling load to contact towards the vehicle rear.
Note that, energy absorption performance can vary due to parameters other than compressive stress (the composition ratio of materials (such as auxiliary agents) in the energy absorbing material), however for rigid polyurethane foam, energy absorption performance is more highly dependent on compressive stress than on other parameters. Accordingly, in the present exemplary embodiment explanation focuses on compressive stress alone, with other parameters ignored.

The partitioning member 20C is disposed between the first energy absorbing member 20A and the second energy absorbing member 20B.
The partitioning member 20C is independent of the mold 10, and is removed from the mold as a unit with the first energy absorbing member 20A and the second energy absorbing member 20B, described later. The partitioning member 20C is provided to the energy absorbing body 20 rather than the mold 10, enabling strength of energy absorbing body 20 to be maintained (making it unlikely to be insufficient). Moreover, the presence of the partitioning member 20C allows the first energy absorbing member 20A and the second energy absorbing member 20B to be molded within the same mold 10 at the same time, enabling an increase in productivity.
Moreover, in the present exemplary embodiment, from the perspective of further increasing productivity, and from the view point of increasing adhesion to the energy absorbing members 20A, 20B, the partitioning member 20C preferably includes a rigid polyurethane foam similar to that of the first energy absorbing member 20A and the second energy absorbing member 20B, with rigid polyurethane foam preferably included as the main component. Note that "main component" refers to a component contained at more than 50% out of the overall configuration components configuring partitioning member 20C. Impurities and the like other than the rigid polyurethane foam may also be mixed in the partitioning member 20C. Similarly to the rigid polyurethane foams 28A and 28B, the rigid polyurethane foam material that is the raw material of the rigid polyurethane foam of the partitioning member 20C may employ a main component of a polyhydroxy compound or a polyisocyanate compound mixed with a catalyst, a foaming agent, a foam stabilizing agent, a flame retardant and other auxiliary agents as desired. Commonly used known compositions may be employed in the manufacture of the rigid polyurethane foams 28A, 28B, and the amounts employed therein may also be standard amounts.

Moreover, in the present exemplary embodiment, the energy absorption performance of the partitioning member 20C is matched with the energy absorption performance of the first energy absorbing member 20A. From the perspective of suppressing the energy absorption performance of the partitioning member 20C from affecting the energy absorption performance of the overall energy absorbing body 20, the difference in compressive (crushing) stress between the partitioning member 20C and the first energy absorbing member 20A is set so as to be less than the difference in compressive (crushing) stress difference between the partitioning member 20C and the second energy absorbing member 20B. More specifically, when the compressive stress of first energy absorbing member 20A is denoted a (N/cm²), the compressive stress of the second energy absorbing member 20B denoted b (N/cm²) and the compressive stress of the partitioning member 20C denoted c (N/cm²), then the compressive stress of the partitioning member 20C is set so as to satisfy the relationships | a - c | < |b - c |. From the perspective of further suppressing the energy absorption performance of the partitioning member 20C from affecting the energy absorption performance of the energy absorbing body 20, the compressive stress of the partitioning member 20C is preferably set such that the difference in compressive stress between the partitioning member 20C and the first energy absorbing member 20A is within ± 20% of the compressive stress of the first energy absorbing member 20A (| a - c | ≤ a × (20/100)). Moreover, the difference between the compressive stress A of the first energy absorbing member 20A and the compressive stress B of the second energy absorbing member 20B (Δ |a - b |) should be determined according to the intended purpose, however for example exceeding 70% up to 98% (a × (70/100) < |a - b| ≤ a × (98/100)) is preferable, and from 80% to 95% (a × (80/100) ≤ |a - b| ≤ a × (95/100)) is even more preferable.
Moreover, when the compressive stress of the first energy absorbing member 20A is greater than the compressive stress of the second energy absorbing member 20B, the compressive stress of the partitioning member 20C is preferably matched to that of the first energy absorbing member 20A that has the greater compressive stress. This is to prevent the partitioning member 20C from being damaged during storage or during insertion into the mold 10.
Note that in the present exemplary embodiment, compressive stress difference can be verified by individual measurements using a compression tester, such as an Autograph manufactured by Shimadzu Corporation.

As described above regarding energy absorption performance, since the partitioning member 20C contains rigid polyurethane foam explanation focuses on compressive stress alone, with other parameters ignored, however the explanation also holds when the term energy absorption performance is substituted for compressive stress.

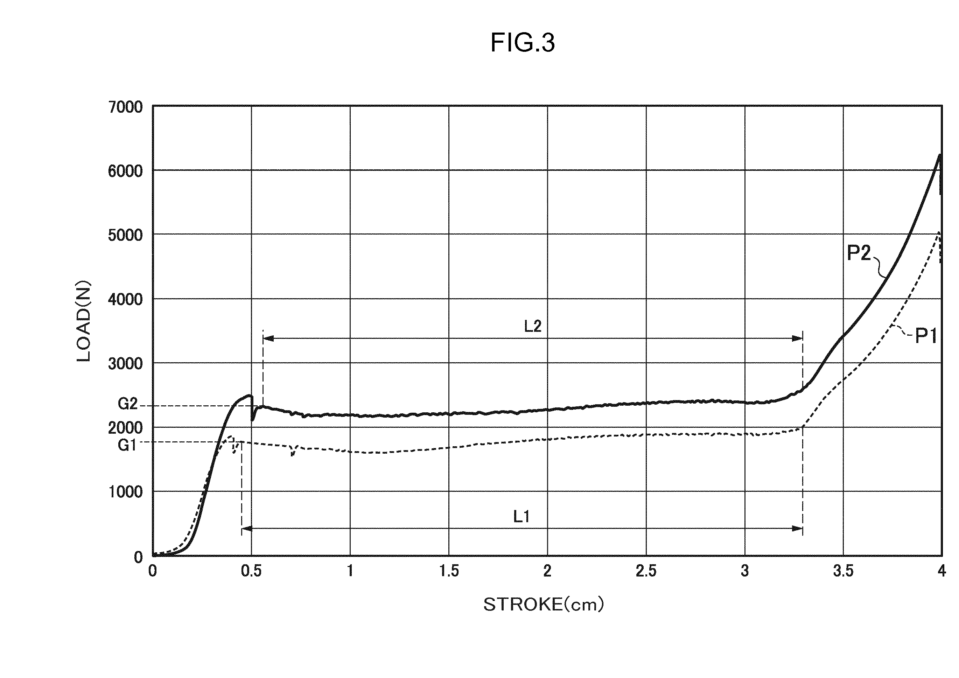

Fig. 3 is a graph respectively illustrating energy absorption performance of the partitioning member 20C and energy absorption performance of the first energy absorbing member 20A.

As illustrated in Fig. 3, in load values the difference between a buckling load G1 (kN) of the partitioning member 20C and a buckling load G2 (kN) of the first energy absorbing member 20A, that exhibit substantially constant energy absorption waveforms, is smaller than the difference between the buckling load G1(kN) of the partitioning member 20C and the buckling load of the second energy absorbing member 20B (not illustrated in the drawings). Moreover, the difference between a stroke (displacement) length L1 (m) of a constant load region of the partitioning member 20C where load exhibits a substantially constant energy absorption waveform in the region of the buckling load G1(kN), and a stroke length L2 (m) of a constant load region of the first energy absorbing member 20A where load exhibits a substantially constant energy absorption waveform in the region of the buckling load G2 (kN), is smaller than the difference between the stroke length L1 (m) of a constant load region of the partitioning member 20C where load exhibits a substantially constant energy absorption waveform in the region of the buckling load G1(kN) and a stroke length (not illustrated in the drawings) of a constant load region of the second energy absorbing member 20B where load exhibits a substantially constant energy absorption waveform in the region of the buckling load (not illustrated in the drawings).
The buckling load G1(kN) of the partitioning member 20C is preferably within ± 20% of the buckling load G2 (kN) of the first energy absorbing member 20A. In addition, the stroke length L1 (m) of the constant load region of the partitioning member 20C where the waveform is substantially constant at the buckling load G1(kN) is preferably within ± 20% of the stroke length L2 (m) of the constant load region of the first energy absorbing member 20A.
More specific explanation follows regarding the length L1 (m) and the length L2 (m). A first waveform P1 represents load against compression stroke when a load is imparted to and the load compresses the partitioning member 20C, and a second waveform P2 represents load against compression stroke when the same load as that imparted to the partitioning member 20C is imparted to and the load compresses the first energy absorbing member 20A. The stroke length L1 (m) of the first waveform P1 where load against stroke is continuous to within ± 20%, is preferably within a range of ± 20% of the stroke length L2 (m) of the second waveform P2 where load against stroke is continuous to within ± 20%.

Returning to Fig. 1, the thickness of the partitioning member 20C is preferably 10 mm to 50 mm. This is since molding becomes easier and durability is increased at 10mm, and above. A thickness of 50 mm or below enables a reduction in the cost of materials, and enables any effect on the energy absorption performance of the energy absorbing body 20 to be suppressed. A thickness of the energy absorbing body 20 of 30 mm or below is even more preferable from the perspective of suppressing the partitioning member 20C from affecting the energy absorption performance of the energy absorbing body 20.
For example in Fig. 1, the average value of the thickness of the partitioning member 20C along the left-right direction on the page is preferably within the range described above.

The shape of the partitioning member 20C is not particularly limited, however a plate shaped member is preferable from the perspective of suppressing costs. A trapezoidal plate shaped member is even more preferable from the perspective of easy insertion and removal with respect to the mold 10 and from the perspective of easy mold release (mold release with a release taper) in cases in which the partitioning member 20C is formed in a mold. A plate shaped member with a flat surface is preferable from the perspective of ease of handling. Moreover, when the partitioning member 20C is configured as a plate shaped member, by the partitioning member 20C including a similar rigid polyurethane foam to that of the first energy absorbing member 20A and the second energy absorbing member 20B, the compressive stress (energy absorption performance) of the partitioning member 20C and the first energy absorbing member 20A are closer to each other than when for example other resins are employed, and when attempting to match the compressive stress (energy absorption performance) of the partitioning member 20C and the first energy absorbing member 20A to one another, there is no need to consider the effect of the thickness of the partitioning member 20C on the compressive stress. Productivity can accordingly be increased compared to when for example other resins are used, since the partitioning member 20C can be provided with a greater thickness (can be made thicker), is easily handled, and is easily inserted into the mold 10.
Moreover, the partitioning member 20C that separates the first energy absorbing member 20A from the second energy absorbing member 20B preferably extends far enough upwards so as to contact the upper mold 14 and give a shape that separates the first energy absorbing member 20A from the second energy absorbing member 20B. Namely, by completely dividing the inside of the lower mold cavity 16 into two with the partitioning member 20C, the rigid urethane foam materials that are the raw materials for the first energy absorbing member 20A and the second energy absorbing member 20B are suppressed from mixing together, enabling consistent energy absorption performance to be achieved in the energy absorbing body 20.

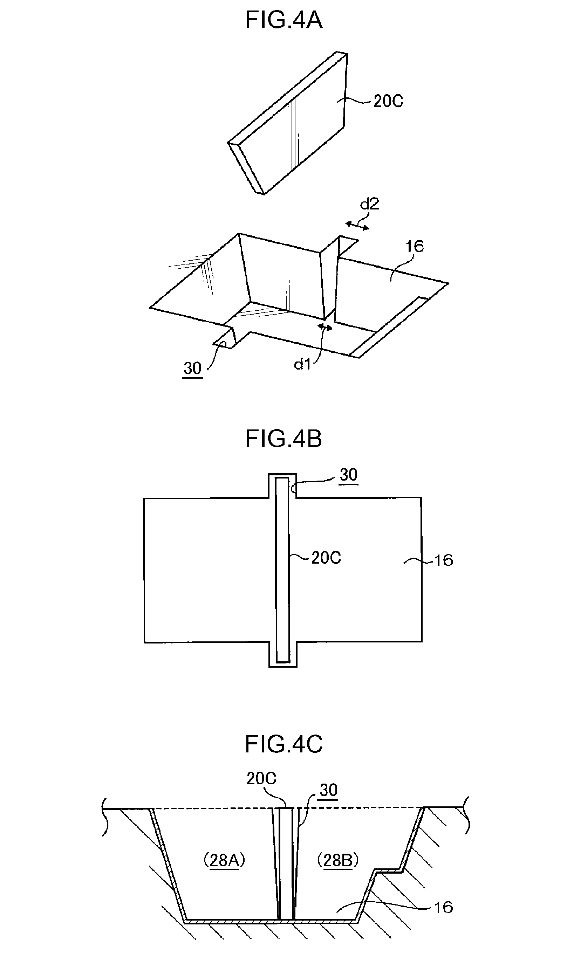

Fig. 4A is a perspective view illustrating the relationship between the lower mold cavity 16 of the lower mold 12 and the partitioning member 20C of the first exemplary embodiment. Fig. 4B is a plan view illustrating the relationship between the lower mold cavity 16 of the lower mold 12 and the partitioning member 20C of the first exemplary embodiment. Fig. 4C is a front face cross-section illustrating the relationship between the lower mold cavity 16 of the lower mold 12 and the partitioning member 20C of the first exemplary embodiment.

Support grooves 30 into which the partitioning member 20C is fitted are provided to the lower mold cavity 16 along the mold pull-out direction. The support grooves 30 perform positioning of and retain the partitioning member 20C, and may be provided with a taper along the mold pull-out direction (d1 < d2) as illustrated in Fig. 4A. In consideration of the ease of mold release, the support grooves 30 may be configured with a greater width than that of the partitioning member 20C, and so as to provide gaps to the partitioning member 20C. Moreover, configuration may be made with not only the two types of the first energy absorbing member 20A and the second energy absorbing member 20B, but with three or more types of energy absorbing members. Since such configurations require plural of the partitioning members 20C, it is necessary to provide the same number of the support grooves 30 as the number of the partitioning members 20C.

Since the partitioning member 20C is pulled out of the mold in a pull-out direction along the direction of the support grooves 30 during removal of the energy absorbing body 20 from the lower mold 12, there is no concern of interference during the pulling out process, and pulling out becomes even easier when the support grooves 30 are provided with a taper along the pull-out direction.
Moreover, since the partitioning member 20C contains rigid polyurethane foam as described above, the partitioning member 20C can be provided with a greater thickness than if it were made from a resin, and depending on the shape of the partitioning member 20C, the depth of the support grooves 30 can be reduced. Moreover, the partitioning member 20C can be configured so as to be capable of standing up by itself even without the support grooves 30 by configuring the partitioning member 20C with a complex shape (even in a plate shaped configuration, such as by configuring a V-shaped surface). Rendering the support grooves 30 unnecessary increases the general applicability of the mold 10 and raises productivity.

### Energy Absorbing Body 20 Manufacture

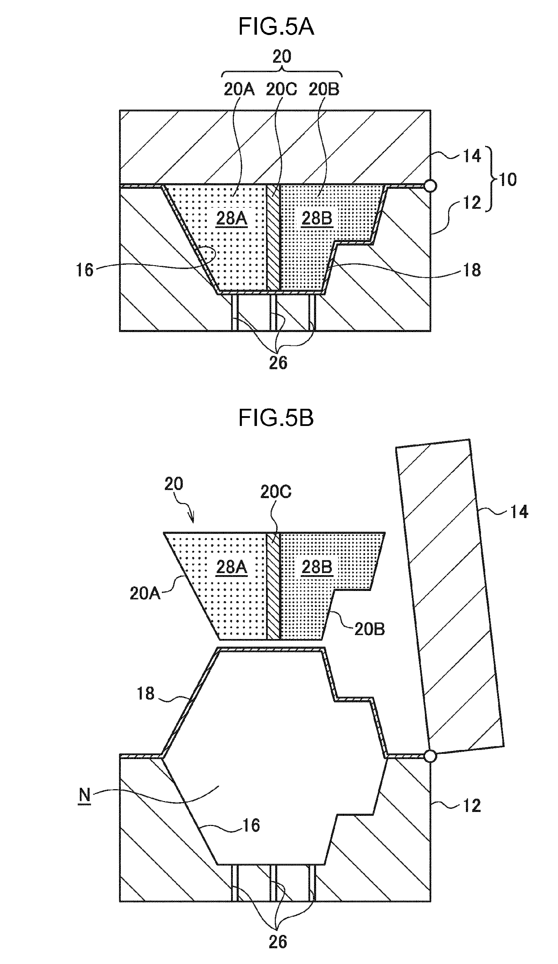

Explanation follows regarding a manufacturing method of the energy absorbing body 20 employing the mold 10. Figs. 5 are manufacturing process drawings of the energy absorbing body 20 according to the first exemplary embodiment of the present invention.

In the present exemplary embodiment, the partitioning member 20C is formed in advance. Mold forming or slab forming may be employed to form the partitioning member 20C.

Next, a placement process is performed in which the formed partitioning member 20C is placed inside the lower mold 12 so as to separate the lower mold cavity 16 inside the mold 10 into at least two compartments.
When this is being performed, air is suctioned out using the air introduction/suction device such that the mold release film 18 adopts the profile of the lower mold cavity 16 prior to the start of molding (see Fig. 1 and Fig. 5A), and the partitioning member 20C is then placed at the upper side of the mold release film 18.

Next, with the partitioning member 20C in place as described above, a molding process of integrally molding the first energy absorbing member 20A and the second energy absorbing member 20B is performed.
Specifically, as illustrated in Fig. 5A, in the molding process the first rigid polyurethane foam material is introduced into one compartment out of the two compartments, and the second rigid polyurethane foam material is introduced into the other compartment of the two compartments, and the upper mold 14 is closed. The introduced rigid polyurethane foam materials are then foamed and expanded.

Lastly, a mold release process is performed to release as a single unit the first energy absorbing member 20A, the second energy absorbing member 20B and the partitioning member 20C as the energy absorbing body 20 from the mold 10.
More specifically, at a stage in the molding process when expansion has ended, the upper mold 14 is opened and the air introduction/suction device is operated such that air is blown through the air pipe 24, the air chamber S and the air communication holes 26 (see Fig. 1) into a gap N between the mold release film 18 and the lower mold cavity 16. As illustrated in Fig. 5B, the energy absorbing body 20 configuring the molding is pushed upwards together with the partitioning member 20C.

When this is performed, since only edge portions of the mold release film 18 are fixed to the lower mold 12, the mold release film 18 and the energy absorbing body 20 can be pushed up using air pressure, with the mold release film 18 separating from the energy absorbing body 20 as this occurs. Lifting up of the mold release film 18 stops at a specific position when a specific amount of air has been input, and the energy absorbing body 20 is released from the mold 10 (mold removal).

An air pressure of 0.5 kg/cm² or greater is preferable during mold release (mold removal), with 1 to 5 kg/cm² being particularly preferable. Although it depends on the shape and size of the molding, increasing the air pressure to close to 5 kg/cm² enables mold release to be performed for moldings of almost any shape. Moreover, although air is normally employed as the flowing body that is introduced to the gap N, a liquid such as water may also be employed in place of air. Obviously, configuration may also be made wherein mold removal is performed by a suction method or by hand without employing the mold release film 18.

Next, due to being formed in advance by vacuum forming, the mold release film 18 can easily be returned to its original shape by actuating the air introduction/suction device to suction out the air from between the mold release film 18 and the lower mold cavity 16, enabling the mold release film 18 to be replaced on the face of the lower mold cavity 16 and reused. Curing time can accordingly be efficiently and reliably shortened, enabling the time taken for a single time of molding to be reduced, increasing the number of times of molding per unit time, and thereby raising productivity. Moreover, since the overall energy absorbing body 20 configuring the molding can be uniformly pushed up using air, undue force is not applied to the energy absorbing body 20, and in particular, the curing time at 80 °C ± 10 °C can be effectively shortened, thereby reducing the mold usage time and increasing the number of times of molding per unit time by about 30%, and enabling productivity to be increased.

### Advantageous Effects

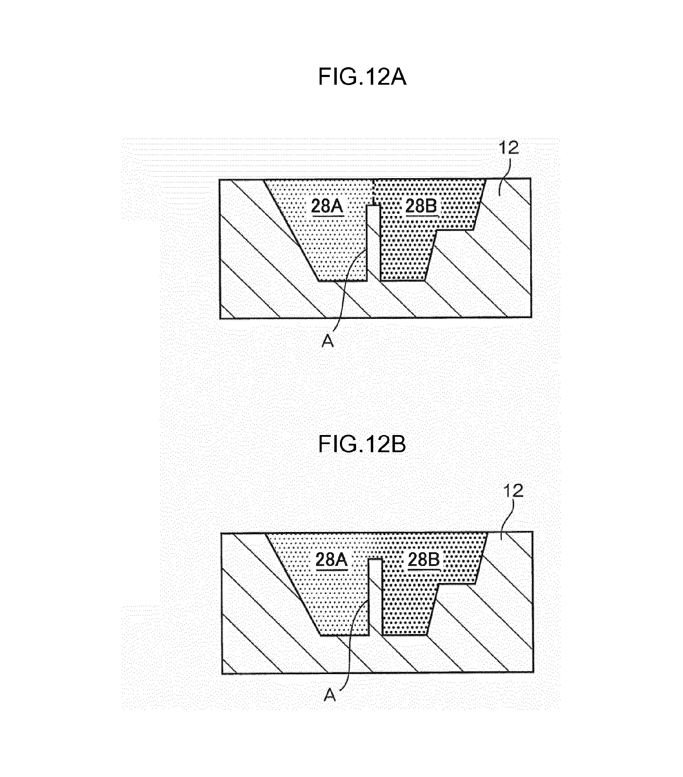

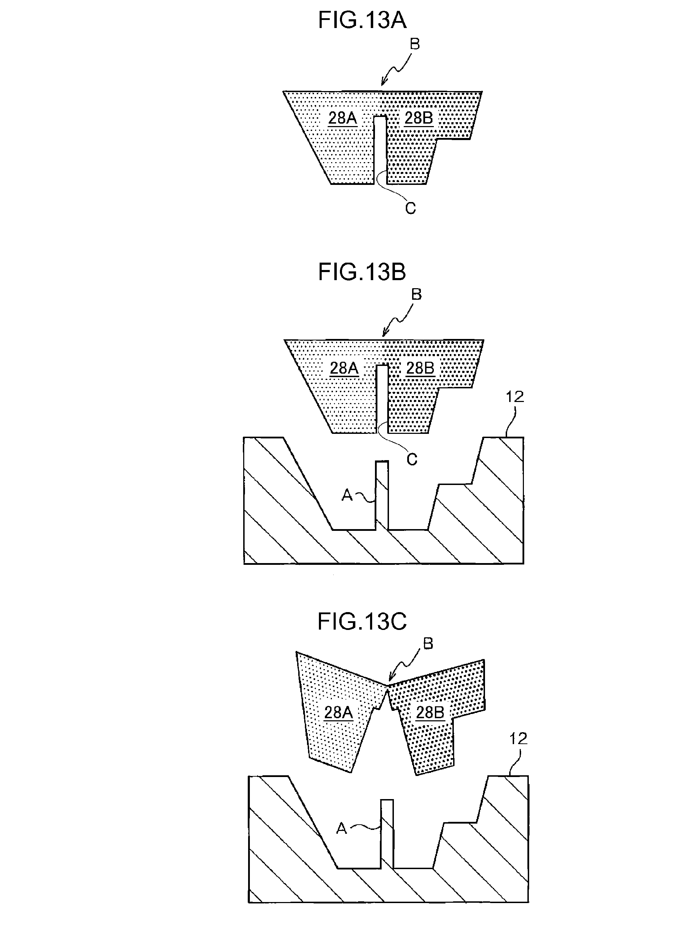

Conventionally, for example as illustrated in Figs. 12 and Figs. 13, a partitioning member A that is made from the same material as a lower mold 12 is integrally provided to the lower mold 12. A energy absorbing body integrally formed with plural energy absorbing members having different compressive stress is manufactured by supplying plural different materials to respective compartments that are partitioned by the partitioning member A.
In such a configuration, when the partitioning member A is tall in height, a deep recessed portion C is formed in the energy absorbing body becomes as illustrated in Fig. 13A. As illustrated in Fig. 13B, a weak portion B that is of insufficient strength is formed at a location configuring a boundary portion during mold removal, and with a risk of damage as illustrated in Fig. 13C when in use after mold removal. Moreover, as illustrated in Fig. 12A, when the height of the partitioning member A is insufficient, depending on factors such as the method of introducing the foam raw materials (for example rigid polyurethane foam materials), as illustrated in Fig. 12B, a uniform boundary may not form between the plural types of rigid polyurethane foam material when plural types of rigid polyurethane foam material are introduced, with the possibility that it may be difficult to obtain consistent energy absorbing body properties (of elasticity, hardness, and the distribution thereof) for each manufactured product.

In the present exemplary embodiment, as explained above, the partitioning member 20C is removed from the mold integrally with the first energy absorbing member 20A and the second energy absorbing member 20B as the energy absorbing body 20. Since the partitioning member 20C is provided to the energy absorbing body 20 rather than the mold 10, the strength of the energy absorbing body 20 may be maintained (so as not to be insufficient). Moreover, productivity can be increased since the presence of the partitioning member 20C enables the first energy absorbing member 20A and the second energy absorbing member 20B to be formed in the same mold 10 and at the same time without mixing.

Moreover, since the partitioning member 20C contains a rigid polyurethane foam similarly to the first energy absorbing member 20A and the second energy absorbing member 20B, productivity may be increased further in comparison to when the partitioning member 20C is formed from a different material to the first energy absorbing member 20A and the second energy absorbing member 20B.
Moreover, adhesion can be increased between the partitioning member 20C and the first energy absorbing member 20A and second energy absorbing member 20B since rigid polyurethane foam has self-adhesive properties.

Moreover, since the difference in compressive (crushing) stress between the partitioning member 20C and the first energy absorbing member 20A is configured so as to be smaller than the difference in compressive (crushing) stress between the partitioning member 20C and the second energy absorbing member 20B, this leads to the energy absorption performance of the partitioning member 20C being matched to the energy absorption performance of the first energy absorbing member 20A, and hence the energy absorption performance of the partitioning member 20C can be suppressed from affecting the energy absorption performance of the overall energy absorbing body 20.

Moreover, when the partitioning member 20C is configured as a plate shaped member, by the partitioning member 20C including a similar rigid polyurethane foam to that of the first energy absorbing member 20A and the second energy absorbing member 20B, the compressive stress (energy absorption performance) of the partitioning member 20C and the first energy absorbing member 20A are closer to each other than when for example a resin is employed, and when attempting to match the compressive stress (energy absorption performance) of the partitioning member 20C and the first energy absorbing member 20A to one another, there is no need to consider the effect of the thickness of the partitioning member 20C on the compressive stress. The partitioning member 20C can be provided with a greater thickness (can be made thicker) than with resin manufacture, is easily handled, and is easily inserted into the mold 10, leading to increased productivity.

The mold release film 18 is moreover attached to the lower mold 12, and when removing the energy absorbing body 20 from the lower mold 12, the partitioning member 20C is separated from the mold release film 18 using air to apply pressure between the mold release film 18 and the surface of the lower mold cavity 16. Mold release is accordingly simple even when the energy absorbing body 20 has a complex external shape.

### Second Exemplary Embodiment

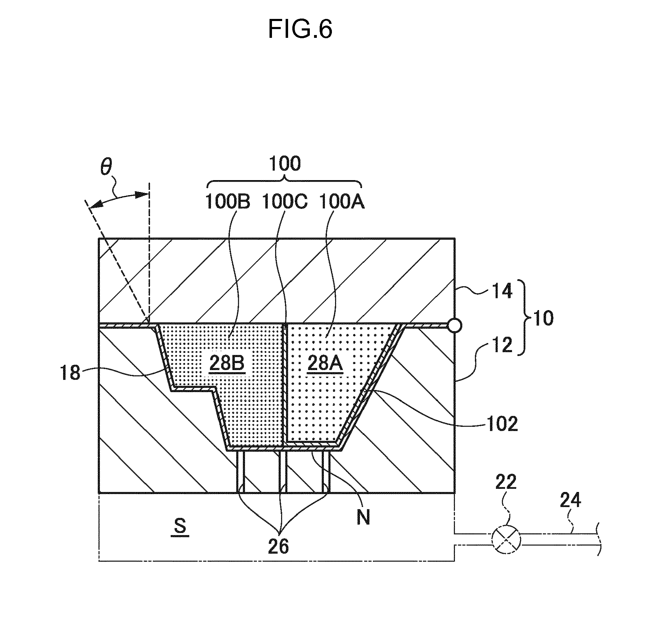

Explanation follows regarding a second exemplary embodiment. Fig. 6 is a front face cross-section illustrating an energy absorbing body and a mold thereof according to a second exemplary embodiment.

### Configuration

As illustrated in Fig. 6, similarly to in the first exemplary embodiment, a mold (mold) 10 for molding an energy absorbing member employed in the present exemplary embodiment is configured by a lower mold 12 and an upper mold 14. Reference to portions similar to those of the first exemplary embodiment is omitted below.

An energy absorbing body 100 of the second exemplary embodiment molded using the mold 10 is configured by: a first energy absorbing member 100A containing a rigid polyurethane foam 28A; a second energy absorbing member 100B containing a rigid polyurethane foam 28B; and an enclosing member 102 of which a portion configures a partitioning member 100C. At least a portion of the surface of the first energy absorbing member 100A is covered by the enclosing member 102, with the partitioning member 100C of the enclosing member 102 provided at a position separating between the first energy absorbing member 100A and the second energy absorbing member 100B. The inside of the energy absorbing body 100 is separated into the first energy absorbing member 100A and the second energy absorbing member 100B.

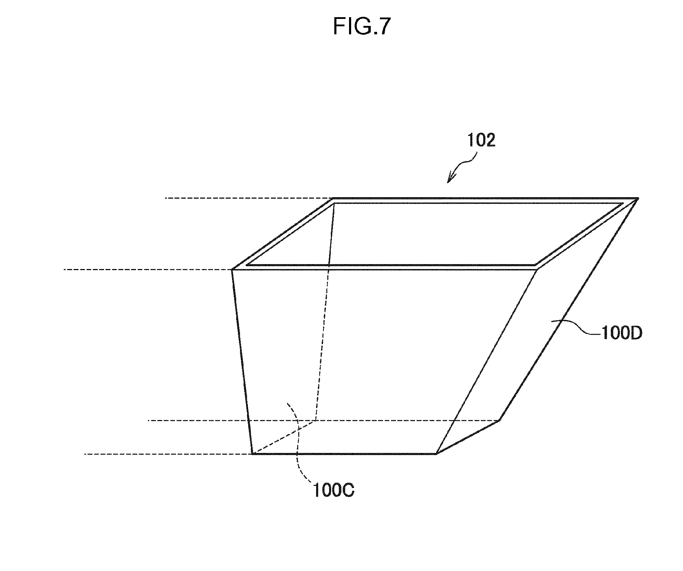

The enclosing member 102 may be configured in a container shape that is referred to as a bathtub shape, as for example illustrated in Fig. 7, and is provided with an exposed member 100D that runs along and makes contact with an inner face of the lower mold 12, and the partitioning member 100C that separates the inside of the lower mold cavity 16 into plural compartments. The enclosing member 102 is configured with a container shape that is open in a direction from which a rigid polyurethane foam material is introduced (upwards) in a liquid state.
The difference in compressive (crushing) stress between the enclosing member 102 and the first energy absorbing member 100A is configured so as to be smaller than the difference in the compressive (crushing stress) stress between the enclosing member 102 and the second energy absorbing member 100B. As in the first exemplary embodiment, the energy absorption performance of the enclosing member 102 is matched to the energy absorption performance of the first energy absorbing member 100A, thereby suppressing effect of the energy absorption performance of the enclosing member 102 on the energy absorption performance of the overall energy absorbing body 100.
Moreover, from the perspective of suppressing any effect on the energy absorption performance of the second energy absorbing member 100A, the exposed member 100D of the enclosing member 102 is disposed on the side of the first energy absorbing member 100A, that is the energy absorption performance matched side of the enclosing member 102.

### Manufacturing Method

Explanation follows regarding manufacture of the energy absorbing body 100 employing the mold 10.

In the present exemplary embodiment, the enclosing member 102 is molded in advance with an external profile following the shape of the cavity of the lower mold 12. The enclosing member 102 contains a rigid polyurethane foam in the present exemplary embodiment. The enclosing member 102 is molded by a vacuum forming method using the mold that is employed in molding the mold release film 18. Molding in a separate mold is possible, however since using the same mold is possible there is no need to provide a new mold, thereby enabling a reduction in costs and man-hours.

The molded enclosing member 102 is placed in the lower mold 12. When this performed, an air introduction/suction device is used to remove air and place the mold release film 18 in a shape following the lower mold cavity 16 prior to molding start (see Fig. 6), and the enclosing member 102 is disposed at an upper side of the mold release film 18.

When this is performed, it is desirable for the partitioning member 100C, that separates the first energy absorbing member 100A and the second energy absorbing member 100B that are each provided as one wall of the enclosing member 102, to extend far enough upwards so as to contact the upper mold 14, as illustrated in Fig. 6, as a shape that completely separates the energy absorbing members 100A, 100B. Namely, the inside of the lower mold cavity 16 is completely divided into two by the partitioning member 100C, such that the rigid polyurethane foam materials that are the raw materials of the first energy absorbing member 100A and the second energy absorbing member 100B do not mix together, enabling the energy absorbing body 100 to be formed with consistent energy absorption performance.

Liquid rigid polyurethane foam materials of different crushing stresses are also introduced on both sides of the partitioning member 100C that divides the lower mold cavity 16 into two inside the lower mold 12, and the upper mold 14 is then closed.

The introduced rigid polyurethane foam materials are then foamed and expanded. At a stage when expansion has ended, the upper mold is opened and the air introduction/suction device is operated such that air is blown through the air pipe 24, the air chamber S and the air communication holes 26 into a gap N between the mold release film 18 and the lower mold cavity 16, thereby pushing up the energy absorbing body 100 configuring the molding together with the enclosing member 102.

When this is performed, since only edge portions of the mold release film 18 are fixed to the lower mold 12, the mold release film 18 and the energy absorbing body 20 can be pushed up using air pressure, with the mold release film 18 separating from the enclosing member 102 and the first energy absorbing member 100B not covered by the enclosing member 102 as this occurs. Lifting up of the mold release film 18 stops at a specific location when a specific amount of air has been input, and the energy absorbing body 100 is released from the mold 10 (mold removal).

Next, due to being formed in advance by vacuum forming, the mold release film 18 can easily be returned to its original shape by actuating the air introduction/suction device to suction out the air from between the mold release film 18 and the lower mold cavity 16. The mold release film 18 can be replaced on the face of the lower mold cavity 16 and reused.

### Advantageous Effects

As described above, the enclosing member 102 of the present exemplary embodiment is molded in advance with an external profile following the lower mold cavity 16.

Accordingly, in comparison to a case in which the enclosing member 102 is not formed in advance and an energy absorbing body is molded by placing an enclosing member of simple shape at the upper side of the mold release film 18 and introducing the rigid polyurethane foam material, even when for example the first energy absorbing member 100A has a complex surface profile, the first energy absorbing member 100A can be formed with the enclosing member 102 being easily disposed with high precision for the intended position and shape of the first energy absorbing member 100A. Moreover, the energy absorbing body 100 can be made such that the enclosing member 102 that covers the first energy absorbing member 100A does not readily come away from the first energy absorbing member 100A.
Namely, when the first energy absorbing member 100A has a comparatively simple shape, a method in which the enclosing member 102 is adhered to the surface of the first energy absorbing member 100A after molding may be considered. However, when the first energy absorbing member 100A has a complex surface profile, correct attachment of the enclosing member 102 to the surface of the first energy absorbing member 100A becomes more difficult from the perspectives of, for example, man-hours and precision working. However, the manufacturing method described above enables the enclosing member 102 to be provided at the desired position even when the first energy absorbing member 100A has a complex surface profile.

Moreover, since the enclosing member 102 is molded using vacuum forming, this enables the enclosing member 102 to be manufactured easily even with a complex external profile. Moreover, the mold used to mold the mold release film 18 can be used as the mold for molding the enclosing member 102. There is therefore no need to provide another mold.

Moreover, the enclosing member 102 is removed from the mold as a single unit with the first energy absorbing member 100A and the second energy absorbing member 100B as the energy absorbing body 20. Strength of the energy absorbing body 100 can accordingly be maintained (so as not to be insufficient) in comparison to cases in which the enclosing member 102 is not present. Moreover, due to the presence of the enclosing member 102, the first energy absorbing member 100A and the second energy absorbing member 100B can be formed within the same mold 10 at the same time, thereby enabling an increase in productivity.

Moreover, since the enclosing member 102 contains a rigid polyurethane foam material similarly to the first energy absorbing member 100A and the second energy absorbing member 100B, productivity can be increased in comparison to when the enclosing member 102 is configured from different materials to the first energy absorbing member 100A and the first energy absorbing member 100B. Moreover, adhesion can be increased between the enclosing member 102 and the first energy absorbing member 100A and the second energy absorbing member 100B since rigid polyurethane foam has self-adhesive properties.

Moreover, the difference in compressive (crushing) stress between the enclosing member 102 and the first energy absorbing member 100A is configured so as to be smaller than the difference in compressive (crushing) stress between the enclosing member 102 and the second energy absorbing member 100B, this leads to the energy absorption performance of the enclosing member 102 matching the energy absorption performance of the first energy absorbing member 100A, enabling the energy absorption performance of the enclosing member 102 to be suppressed from affecting the energy absorption performance of the overall energy absorbing body 100. However, since the enclosing member 102 includes the exposed member 100D as well as the partitioning member 100C, compared to the first exemplary embodiment, out of the overall volume of the energy absorbing body 100, the volume occupied by the first energy absorbing member 100A is smaller than in the first exemplary embodiment. It is therefore preferable to omit the exposed member 100D such that only the partitioning member 20C is present, as described above in the first exemplary embodiment.

Moreover, rigid polyurethane foam material is introduced inside the enclosing member 102 during molding of the energy absorbing body 100, with the first energy absorbing member 100A formed inside the enclosing member 102. Flaking of the rigid polyurethane foam can thereby be reduced from the surface of the first energy absorbing member 100A.

### Modified Examples

Specific exemplary embodiments of the present invention have been described in detail, however the present invention is not limited to these embodiments. It would be obvious to a practitioner skilled in the art that various embodiments are possible within the range of the present invention. For example, plural of the exemplary embodiments detailed above may be combined as appropriate. The modification examples described below may also be combined as appropriate.

For example, in the first exemplary embodiment and the second exemplary embodiment, the mold release film 18 is provided in the lower mold 12. Explanation has been given regarding mold removal using the mold release film 18, however the mold release film 18 may be omitted when mold removal is performed using a suction method or by hand. In such cases, a mold release agent may be coated on the surface of the lower mold cavity 16 as required, or the surface of the lower mold cavity 16 may be coated with a fluororesin.

Moreover, configuration may be made employing not only the two types of the rigid polyurethane foam 28A, 28B (100A, 100B), but employing three or more types of rigid polyurethane foam. In such cases plural partitioning members 20C (100C) are prepared.

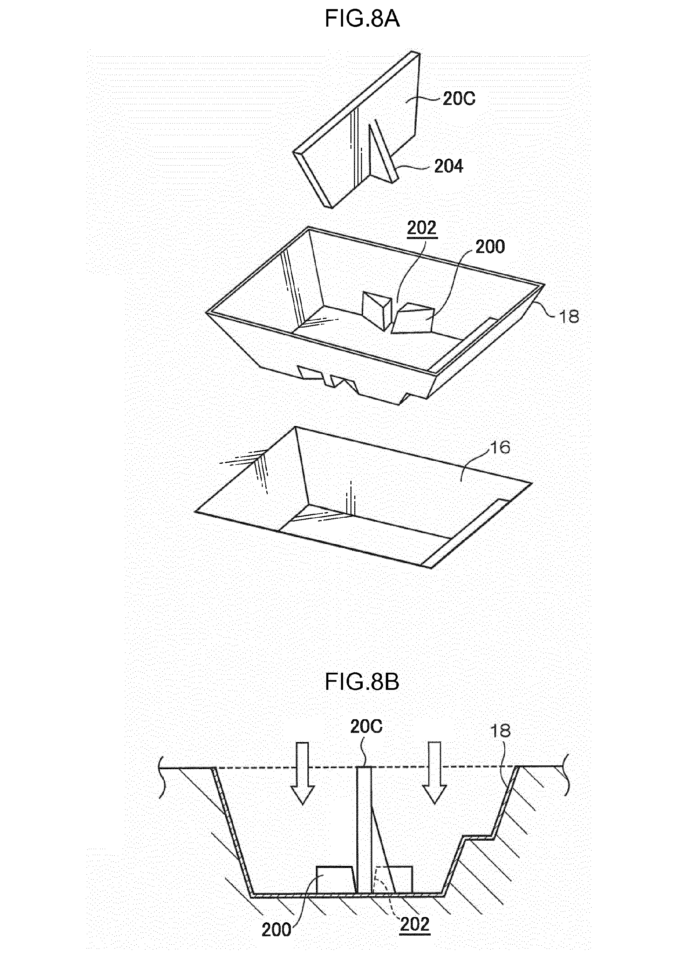

Fig. 8A is a perspective view illustrating the relationship between the lower mold cavity 16 of the lower mold 12 and the partitioning member 20C in another configuration of first exemplary embodiment. Fig. 8B is a front face cross-section illustrating the relationship between the lower mold cavity 16 of the lower mold 12 and the partitioning member 20C in another configuration of the first exemplary embodiment.
As illustrated in Fig. 8A and Fig. 8B, in the present configuration, the mold release film 18 is provided with support portions 200 and support grooves 202 that retain the partitioning member 20C. Rigid polyurethane foam materials are introduced into the lower mold cavity 16 that is partitioned by the partitioning member 20C, and the foam material is foamed and expanded, integrally forming the first energy absorbing member 20A and the second energy absorbing member 20B, thereby configuring the energy absorbing body 20 that is molded such that it can be removed from the lower mold 12 together with the partitioning member 20C.
In cases in which it is difficult to support and position the partitioning member 20C using the support grooves 202 alone, configuration may be made such that for example a leg portion 204 is provided to the partitioning member 20C on the first energy absorbing member 20A side only, such that the partitioning member 20C is able to stand by itself when placed in the lower mold cavity 16. Note that the leg portion 204 is provided only to the first energy absorbing member 20A side, and not provided to the second energy absorbing member 20B side, so as not to affect the energy absorption performance of the second energy absorbing member 20B.
The support grooves 202 are grooves that are provided to an inner face of the mold release film 18 between the support portions 200 so as to run along the pull-out direction. The support grooves 202 may be provided with a taper in the pull-out direction, and the inner face profile of the support portion 200 may similarly be provided with a taper.
In such a structure, there is no need to provide the lower mold 12 with the support grooves 30 such as illustrated in Fig. 4A to Fig. 4C, and there is no need to provide a dedicated lower mold 12. The lower mold 12 can therefore be used for more than one purpose, enabling a reduction in costs, and also enabling modification of a manufacturing line to be carried out quickly and easily.

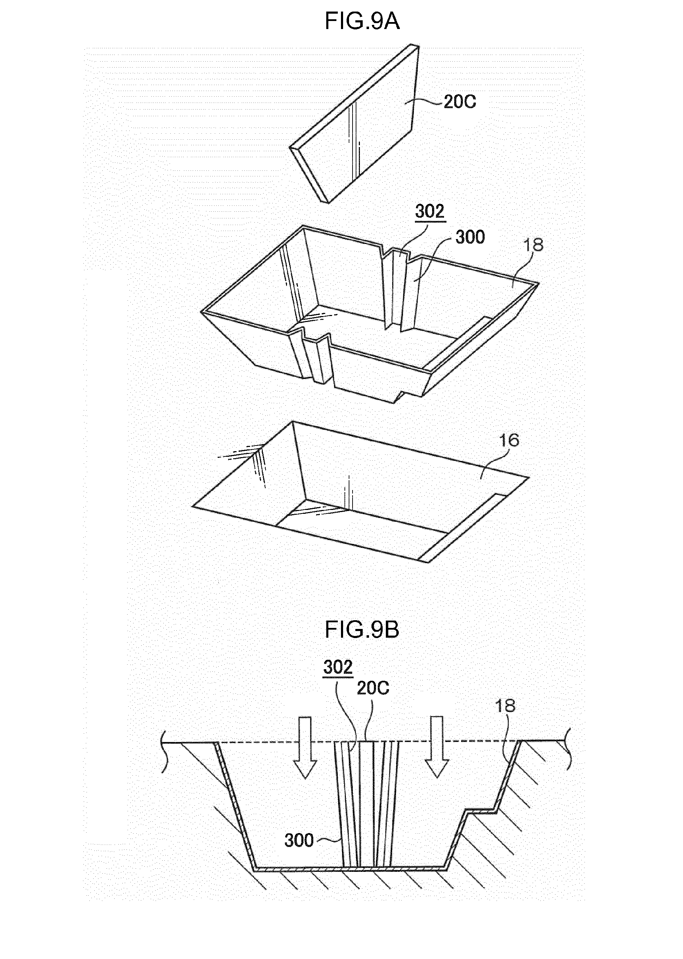

Fig. 9A is a perspective view illustrating a relationship between the lower mold cavity 16 of the lower mold 12 and the partitioning member 20C of another configuration of the first exemplary embodiment. Fig. 9B is a front face cross-section illustrating the relationship between the lower mold cavity 16 of the lower mold 12 according to the other configuration of the first exemplary embodiment and the partitioning member 20C.
As illustrated in Fig. 9A and Fig. 9B, in the present configuration the mold release film 18 is provided to the lower mold cavity 16 of the lower mold cavity 16 of the lower mold 12 in a configuration enabling the energy absorbing body 20 to be more easily removed from the lower mold 12. The mold release film 18 is moreover provided with support portions 300 and support grooves 302 that retain the partitioning member 20C. The support grooves 302 differ from the structure illustrated in Fig. 8 in that they are provided spanning the mold release film 18 depth direction (pull-out direction), enabling the partitioning member 20C to be positioned whilst being retained by the support grooves 302. Similarly to as illustrated in Figs. 8, rigid polyurethane foam materials are introduced into the lower mold cavity 16 that is partitioned by the partitioning member 20C, and the foam material is foamed and expanded, forming the energy absorbing body 20 with the partitioning member 20C integrated with the first energy absorbing member 20A and the second energy absorbing member 20B, thereby configuring the energy absorbing body 20 removed from the lower mold 12 as the energy absorbing body 20.
When this is being performed, the partitioning member 20C can be reliably retained at the desired position, and high positional precision can be maintained in the lower mold cavity 16 since the partitioning member 20C is retained at both sides. The support grooves 302 are grooves provided running in the pull-out direction at the inner face of the mold release film 18. As illustrated in Fig. 9B, a taper may be provided in the pull-out direction, and the shape of the support portion 300 may similarly be provided with a taper.
Such a structure renders it unnecessary to provide a dedicated lower mold 12 with support grooves 30 such as those illustrated in Fig. 4A to Fig. 4C. The lower mold 12 can therefore be used for more than one purpose, enabling a reduction in costs, and also enabling modification of a manufacturing line to be carried out quickly and easily.

The shape of the enclosing member 102 of the second exemplary embodiment may also be configured with a shape other than a container shape that is referred to as a bathtub shaped.

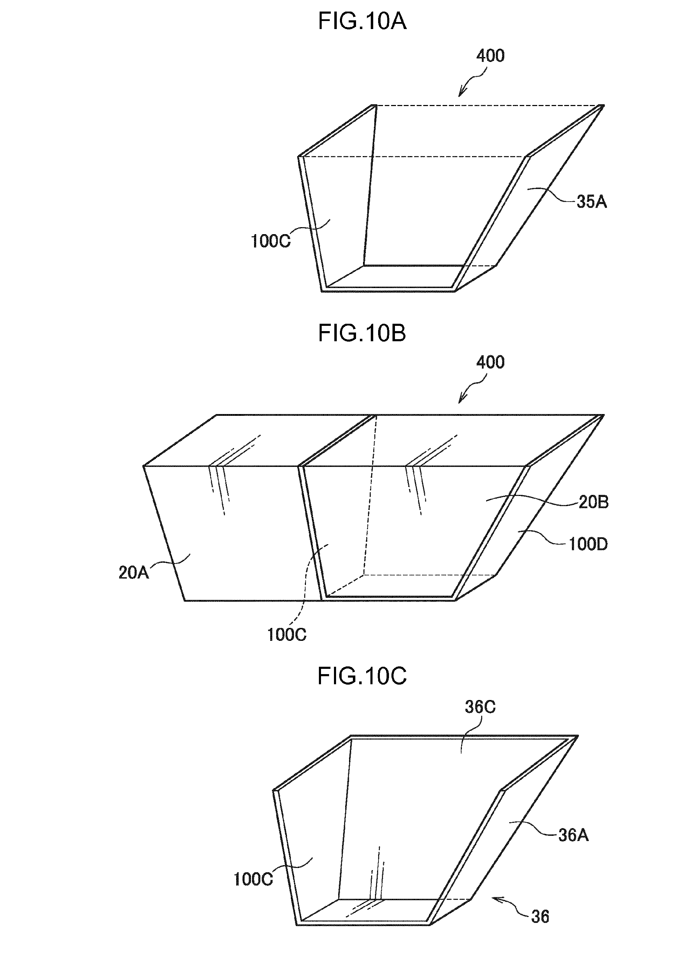

Fig. 10A illustrates an enclosing member 400 of another configuration of the second exemplary embodiment.
As illustrated in Fig. 10A, the enclosing member 400 is open at both side faces of a partitioning member 100C and is configured in a simple belt shape, such that as illustrated in Fig. 10B, the energy absorbing body 20 molded therewith is configured with a shape in which a small proportion of the surface area of the energy absorbing body 20 is occupied by a portion covered by the enclosing member 400.
Such a structure enables the enclosing member 400 to be configured with a simple shape of a single bent plate, as illustrated in Fig. 10A, thereby enabling simple manufacture. Moreover, when configuration is made such that there is a small difference in energy absorption performance between an exposed portion and the portion covered by the enclosing member 400, as illustrated for example in Fig. 10B, since two faces of the portion restrained by the enclosing member 400 configure exposed portions 100D, the energy absorption performance of both members can be made similar. An energy absorbing body with a desired energy absorption performance can accordingly by obtained by selecting any appropriate shape according to the desired performance from out of the second exemplary embodiment, the present configuration, or an intermediate shape open at one face that contacts the lower mold 12, as illustrated in Fig. 10C, depending on the difference in energy absorption performance demanded.

In the first exemplary embodiment and the second exemplary embodiment, the mold release film 18 that is formed by vacuum forming is only provided to the lower mold 12, however a polypropylene film may be similarly provided to the upper mold 14. In particular, it is preferable to provide a mold release film that is vacuum formed with a similar profile to the cavity when the upper mold 14 includes a cavity that has a complex shape.

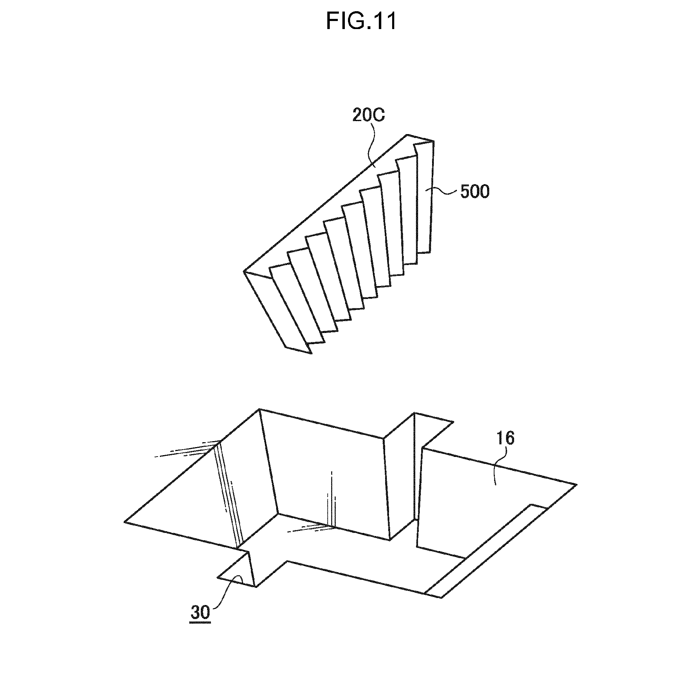

Moreover, in the first exemplary embodiment, as illustrated in Fig. 4A to Fig. 4C, explanation has been given regarding a case in which the partitioning member 20C is a plate member with a flat surface, however, in cases in which the self-adhesive properties of the partitioning member 20C (rigid polyurethane foam) alone are insufficient, configuration may be made as illustrated in Fig. 11, with an uneven portion 500 only on the first energy absorbing member 20A side surface of the partitioning member 20C. Such a configuration enables the adhesion surface area between the partitioning member 20C and the first energy absorbing member 20A to be increased.
Moreover, from the perspective of increasing direct adhesion, an adhesive layer (not illustrated in the drawings) with higher adhesive force than the self-adhesiveness of the partitioning member 20C may be provided between the partitioning member 20C and the first energy absorbing member 20A, or the second energy absorbing member 20B, or both.

Note that, one example of a use of the present invention is in a vehicle provided with a vehicle compartment and with the energy absorbing body 20 (or the energy absorbing body 100) disposed inside the vehicle compartment. For example, as illustrated in Fig. 2A, the optimum seat position for an occupant of the vehicle varies depending on the physical frame of the occupant, however the optimum seat position is obtained mainly by sliding the seat along the vehicle front-rear direction.

An occupant P1 with a large physical frame adjusts the seat towards the vehicle rear, and an occupant P2 with a small physical frame adjusts the seat towards the vehicle front, and an energy absorbing member with high absorption energy is desirable for a person of large physical frame and heavy weight, and an energy absorbing body with low absorption energy is preferable for an occupant of small physical frame and low weight. Accordingly, as illustrated in Fig. 2A and Fig. 2B, there is a need to integrally form plural types of energy absorbing members of different energy absorption performance (displacement/input relationships) along the vehicle body front-rear direction. Applying the configuration of the present invention enables the energy absorbing body 20 (or the energy absorbing body 100) to meet the above requirements.

Moreover, as illustrated in Fig. 2A, a face provided with the energy absorbing body 20 (or the energy absorbing body 100) may for example be a vehicle interior side wall, or may be an inner face of the roof. The change in energy absorption performance with location is also not limited to the direction illustrated in Fig. 2A, and various applications may be considered, such as disposing plural energy absorbing bodies with different distributions.

Note that the entire disclosure of Japanese Patent Application No. 2011-175976 is incorporated into the present specification by reference.
All cited documents, patent applications and technical standards mentioned in the present specification are incorporated by reference in the present specification to the same extent as if the individual cited documents, patent applications and technical standards were specifically and individually incorporated by reference in the present specification.

## Claims

1. An energy absorbing body comprising:
a first energy absorbing member that contains a rigid polyurethane foam;
a second energy absorbing member that contains a rigid polyurethane foam and that has different compressive stress compared to the first energy absorbing member; and
a partitioning member that contains a rigid polyurethane foam, that is disposed between the first energy absorbing member and the second energy absorbing member, and that has a smaller difference in compressive stress with respect to the first energy absorbing member than a difference in compressive stress with respect to the second energy absorbing member.

2. The energy absorbing body of claim 1, wherein the partitioning member is a plate shaped member.

3. The energy absorbing body of either claim 1 or claim 2, wherein the compressive stress of the first energy absorbing member is greater than the compressive stress of the second energy absorbing member.

4. The energy absorbing body of any one of claim 1 to claim 3, wherein the partitioning member has a thickness of from 10 mm to 50 mm.

5. The energy absorbing body of any one of claim 1 to claim 4, wherein the partitioning member includes a leg portion on a first energy absorbing member side only.

6. The energy absorbing body of any one of claim 1 to claim 5, wherein the partitioning member includes an uneven portion on a first energy absorbing member side only.

7. The energy absorbing body of any one of claim 1 to claim 6, further comprising an adhesive layer between the first energy absorbing member and the partitioning member, or between the second energy absorbing member and the partitioning member, or both.

8. A manufacturing method for the energy absorbing body of any one of claim 1 to claim 7, the energy absorbing body manufacturing method comprising:
a placement process of placing the partitioning member in a mold for molding the energy absorbing member, thereby dividing an inside of the mold into 2 or more compartments;
a molding process of molding the first energy absorbing member and the second energy absorbing member integrally with one another by respectively introducing and foaming a first rigid polyurethane foam material in one compartment out of the 2 compartments and a second rigid polyurethane foam material in the other compartment out of the 2 compartments; and
a mold release process of releasing as a single unit the first energy absorbing member, the second energy absorbing member and the partitioning member from the mold.

9. The energy absorbing body manufacturing method of claim 8, wherein in the placement process, the partitioning member is supported by a support portion configured by a groove that extends in a pull-out direction along an inner wall of the mold.

10. The energy absorbing body manufacturing method of either claim 8 or claim 9, wherein:
an air communication hole is provided inside a lower mold of the mold;
a mold release film that is formed with an external profile following a shape of an inner face of the lower mold is disposed in the lower mold prior to the placement process; and
in the mold release process, air is introduced through the air communication hole into a gap between the mold release film and the lower mold, separating as a single unit the first energy absorbing member, the second energy absorbing member and the partitioning member from the mold.

11. The energy absorbing body manufacturing method of claim 8, wherein:
a mold release film, that is formed with an external profile following a shape of an inner face of a lower mold, is disposed in the lower mold of the mold prior to the placement process; and
in the placement process, the partitioning member is supported by a support portion that projects out at an inner face of the mold release film, which is formed with an external profile following the shape of the inner face of the lower mold.
